# DEMANDE DE BREVET EUROPEEN

(11) **EP 1 609 671 A2**
(43) Date de publication de la demande: **28.12.2005**
(21) Numéro de dépôt: 05358007.2
(22) Date de dépôt: 17.06.2005
(51) Int. Cl.: B60P 3/34

(54) **Module d'habitation pliant destiné à être monté sur le toit d'un véhicule automobile**

(30) Priorité: 21.06.2004 FR 0406703
(71) Demandeur: Valdy, Pierre Gabriel, 83000 Toulon (FR)
(72) Inventeur: Valdy, Pierre Gabriel, 83000 Toulon (FR)

(57) **Abrégé**

Le module d'habitation comprend un bac inférieur fixe (4) supportant un matelas et un bac supérieur (5) mobile articulé autour de charnières latérales. Dans une première phase de déploiement le bac mobile (5) s'entrouvre automatiquement au moyen d'un ressort (12) jusqu'à un angle supérieur à 20 degrés et dans une deuxième phase il s'ouvre manuellement jusqu'à un angle supérieur à 200 degrés. Un résultat remarquable de la géométrie de l'ensemble du dispositif de déploiement est que, lorsque le bac mobile (5) est entrouvert, la hauteur de préhension de l'extrémité inférieure réglable (13) du marchepied (9) reste constante et accessible quelque soit la hauteur du véhicule.

L'invention concerne le domaine des loisirs et plus spécialement celui du camping caravaning.

## Description

L'invention concerne le domaine des loisirs et plus spécialement celui du camping caravaning.

Elle a pour objet un module d'habitation pliant destiné à être monté sur le toit d'un véhicule automobile.

Il existe actuellement sur le marché, des tentes de toit constituées essentiellement d'un bac inférieur fixe supportant un lit et d'un bac supérieur mobile pouvant être soulevé de bas en haut de façon à former, en collaboration avec une toile latérale, un abri pour la nuit. Leur principal inconvénient est de ne disposer que d'un simple lit, limitant par la même l'intérêt de leur utilisation. De plus leur accès se situant au sommet d'une échelle, est périlleux.

Afin de pouvoir disposer d'un espace plus important qui permette la station debout, il est prévu des auvents que l'on peut venir accoler au module d'habitation mais ces auvents ne sont pas déployés en même temps que le module d'habitation et doivent être montés à la façon d'une tente de camping.

Plusieurs solutions en vue d'offrir un espace plus accueillant, c'est à dire un espace qui permette la station debout, ont été imaginées mais, à présent, aucune n'a vu le jour sur le marché.

De telles solutions sont décrites dans les brevets US 3712315 , US 4111479 et FR 2085386. Le premier brevet décrit un module d'habitation qui ne comporte pas de plancher mais une simple extension en toile vers l'arrière du véhicule qui permet la station debout. Les deux autres brevets décrivent un module d'habitation dont le bac supérieur mobile pivote avec un angle de 180 degrés vers l'avant pour former un plancher au dessus du capot du véhicule. Mais la hauteur d'accès reste assez importante et il n'est pas décrit de dispositif qui rende la manoeuvre de déploiement aisée.

En dehors du fait que ces modules doivent être très légers et peu encombrants une fois pliés, une des principales difficultés de conception est leur dispositif de déploiement. En effet la hauteur du toit d'un véhicule est telle que la manoeuvre de déploiement se fait toujours à bout de bras et qu'il est alors difficile d'exercer un couple suffisant pour faire pivoter le ou les bacs supérieurs mobiles.

L'inventeur a, dans le passé, imaginé une première solution originale et décrite dans le brevet FR 8310945. La principale caractéristique de cette invention est que le bac supérieur mobile est formé de deux parties articulées et que lors du déploiement une des parties vient longer le pare-brise du véhicule et l'autre vient s'appuyer horizontalement au niveau du capot. Cette caractéristique permet au module d'avoir un faible encombrement une fois plié, mais la hauteur d'accès reste assez importante et il n'est pas prévu de dispositif qui rende la manoeuvre de déploiement aisée. De plus, les profils longitudinaux des véhicules évoluent et cette solution n'est plus bien adaptée aux pare-brises plongeants des véhicules modernes. L'inventeur a alors imaginé une deuxième solution originale et décrite dans le brevet FR 9907132. Le principal objectif de cette invention est de viser à réduire la hauteur d'accès du plancher du module et à en faciliter son déploiement. La principale caractéristique est que le bac supérieur mobile est en une seule partie et se déploie sur le côté du véhicule en pivotant d'un angle supérieur à 200 degrés. Cette caractéristique permet d'obtenir un plancher formé par la paroi latérale intérieure du bac supérieur mobile qui est d'une hauteur d'accès raisonnable et un module qui permet la station debout tout en restant d'une hauteur hors tout raisonnable.

Ce brevet décrit aussi le dispositif de déploiement qui consiste à tirer le marchepied articulé et le dispositif de compensation du poids du bac supérieur mobile constitué par des ressorts de compression à gaz coulissants à l'intérieur du bac supérieur mobile et liés au bac inférieur fixe par un dispositif de bielle de traction. Toutefois ce dispositif ne s'est pas révélé tout à fait satisfaisant au niveau de son fonctionnement. La géométrie du dispositif est telle qu'au début du déploiement le poids du bac ne peut être suffisamment compensé, ce qui rend son ouverture malaisée et qu'en fin de déploiement le poids du bac est trop compensé et lorsque la toile est mise en tension le bac a tendance à remonter.

La présente invention consiste en un module d'habitation comportant un bac supérieur mobile articulé autour de charnières latérales qui dans une première phase s'entrouvre automatiquement au moyen d'un ressort jusqu'à un angle de plus de 20 degrés et dans une deuxième phase s'ouvre manuellement jusqu'à un angle de plus de 200 degrés.

On comprendra mieux l'invention en se référant aux figures suivantes :
- Les figures 1 et 2 représentent le module d'habitation fermé et installé sur le véhicule.
- Les figures 3 et 4 représentent le module d'habitation lors des différentes phases de son déploiement.
- Les figures 5 et 6 représentent le module d'habitation entièrement déployé.

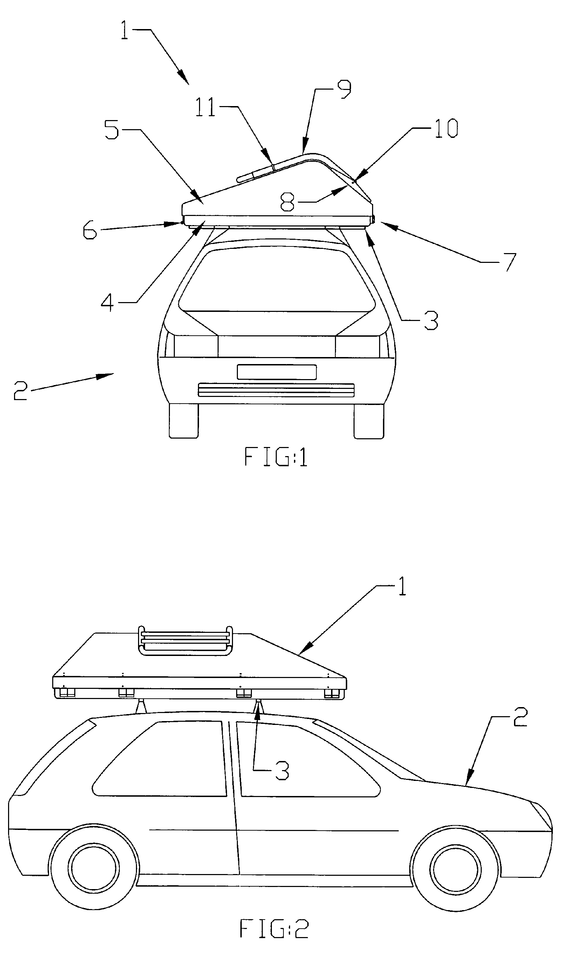

La figure 1 représente une vue de face du module d'habitation (1) fermé, installé sur le toit du véhicule (2) par l'intermédiaire de barres de toit (3).

Le module d'habitation est constitué essentiellement d'un bac inférieur fixe (4) supportant un matelas et d'un bac supérieur mobile (5) articulé autour de charnières (6).

L'axe de ces charnières est avantageusement surbaissé par rapport au plan de joint des deux bacs afin que l'effort d'ouverture exercé à bout de bras puisse exercer au niveau du bac mobile un couple d'ouverture plus important. Un dispositif de fermeture (7) solidarise les deux bacs lorsqu'ils sont fermés.

Le plancher est constitué par la paroi intérieure (8) du bac mobile (5).

Le marchepied (9) qui permet l'accès au plancher (8) lorsque le bac mobile est déployé, est articulé sur 180 degrés autour de l'axe (10) et maintenu replié au moyen de clips (11).

La figure 2 représente une vue latérale du module d'habitation fermé (1) installé sur le toit du véhicule (2) par l'intermédiaire de barre de toit (3).

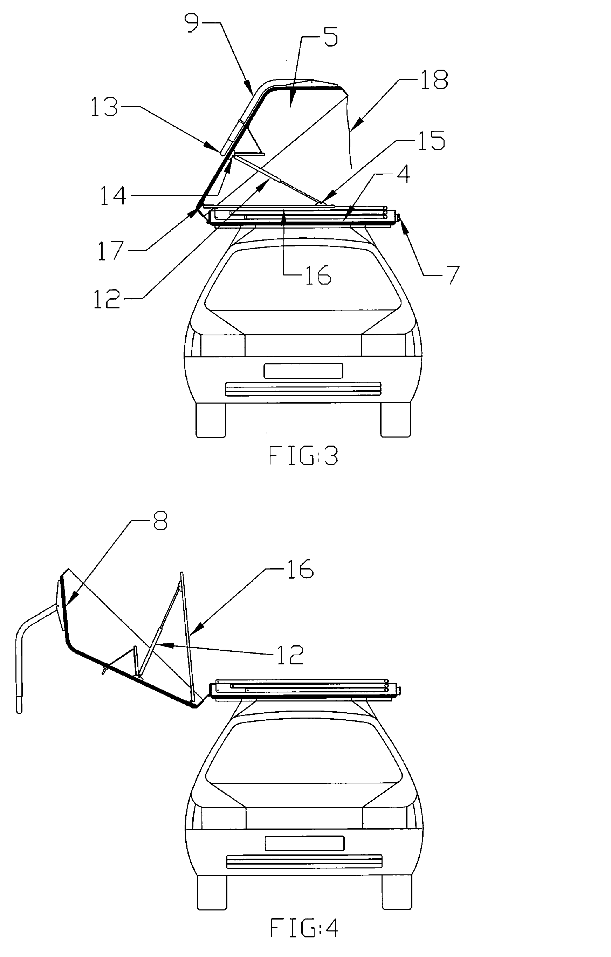

La figure 3 représente une vue en coupe du module d'habitation entrouvert. A la suite de l'ouverture du dispositif de fermeture (7), le bac mobile (5) s'entrouvre automatiquement sous l'action du ressort de compression (12), jusqu'à un angle de plus de 20 degrés lorsque le ressort arrive en fin de course. Une fois le bac entrouvert, il est alors possible de prendre à bout de bras l'extrémité inférieure réglable (13) du marchepied articulé et de continuer manuellement l'ouverture du bac jusqu'à un angle de plus de 200 degrés, jusqu'à ce que le marchepied vienne s'appuyer sur le sol.

Sur le module d'habitation présenté, lesdits angles sont préférentiellement de 40 degrés en fin d'ouverture automatique et de 220 degrés en fin d'ouverture manuelle.

Le ressort de compression (12) est avantageusement un ressort à gaz. Une des extrémités (14) est articulée sur le bac mobile et l'autre extrémité (15) est articulée sur un bras de réaction (16) pivotant autour d'un axe (17) proche de celui des charnières. Lors de la première phase d'ouverture automatique le bras de réaction (16) reste en appui sur le bac fixe (4) et lors de la deuxième phase d'ouverture manuelle, le ressort est en fin de course et le bras quitte alors son appui et pivote avec le bac mobile (5).

L'extrémité inférieure (13) du marchepied (9) est télescopique et peut être réglée en fonction de la hauteur du véhicule. Une conséquence remarquable de la géométrie de l'ensemble du dispositif de déploiement est que, lorsque le bac mobile (5) est entrouvert, la hauteur de préhension de l'extrémité inférieure réglable (13) du marchepied (9) reste constante et accessible quelque soit la hauteur du véhicule. Sur le modèle présenté la hauteur de préhension de l'extrémité du marchepied est de 1.95 mètres, quelque soit la hauteur du véhicule.

Une sangle (18) fixée sur le bac mobile côté opposé aux charnières, permet de tirer le bac en comprimant le ressort afin de le refermer.

La figure 4 représente une vue en coupe du module d'habitation dans la deuxième phase d'ouverture manuelle. Le ressort (12) est bloqué en fin de course et le bras de réaction (16) a quitté son appui et pivote avec le bac mobile (5).

Sur le module d'habitation présenté le bras de réaction (16) est constitué avantageusement par un plateau articulé faisant office de table. Ce plateau prend appui sur le matelas lors de la première phase d'ouverture, et est parallèle au plancher (8) du bac (5) lorsque le ressort (12) est en fin de course. La raideur du ressort de compression est suffisante pour maintenir la table horizontale lorsque le bac mobile (5) est déployé. Il en résulte un déploiement de la table simplifié puisqu'elle est déployée en même temps que le bac mobile.

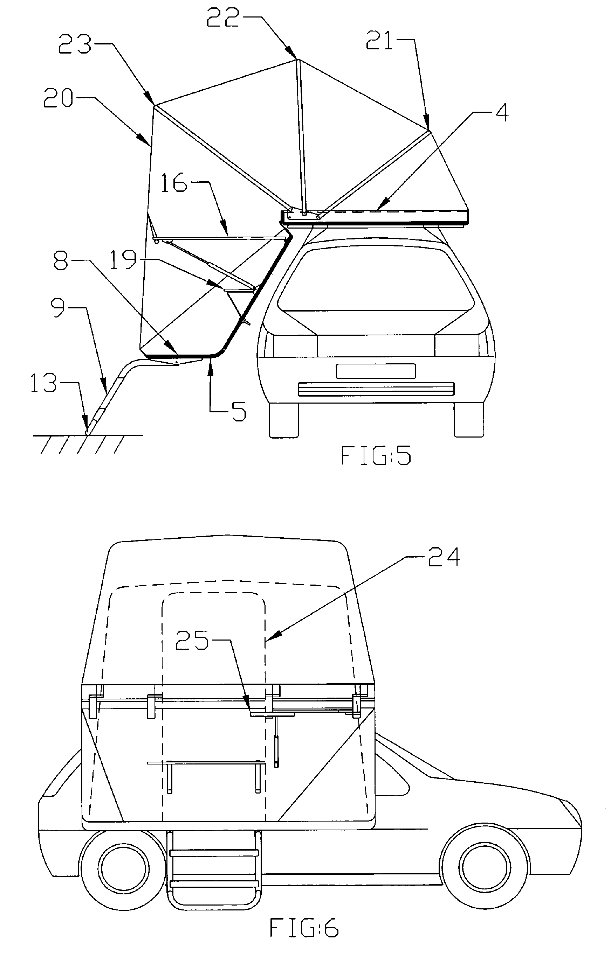

La figure 5 représente une vue en coupe du module d'habitation entièrement déployé. L'extrémité télescopique (13) du marchepied (9) en contact avec le sol est réglée de telle façon que le plancher formé par la paroi latérale intérieure (8) du bac mobile (5) se retrouve à l'horizontale. Un banc (19) permet de s'asseoir à table et sert aussi de marche pour accéder au lit supporté par le bac fixe (4). La capote (20) est solidaire du bac fixe (4) et des trois arceaux (21, 22 et 23). Elle est déployée en faisant pivoter les dits arceaux et maintenue sur le bac mobile au moyen de fixations rapides du type pressions.

La figure 6 représente une vue latérale du module d'habitation entièrement déployé. Une porte (24) fermée par une fermeture à glissière est découpée dans la toile au droit du marchepied. Une poignée (25) solidaire du plateau de la table permet de se tenir lors de l'entrée et de la sortie du module.

Les bacs sont avantageusement construits en matériaux sandwich pour être léger et assurer une bonne rigidité. Cela permet notamment au bac mobile en appui sur le marchepied central de ne pas se voiler sous la charge. Le module d'habitation est avantageusement équipé d'accessoires de confort pour l'étape (arceau équipé d'un éclairage et table équipée d'un évier et d'un réchaud).

Dans l'exemple représenté les charnières sont situées à droite du véhicule mais elles pourraient être situées à gauche sans sortir du cadre de l'invention. Les caractéristiques de l'invention permettent au module d'habitation de se monter sur n'importe quel type de véhicule, que ce soit une berline, un break, un monospace ou un véhicule tout terrain.

## Revendications

1. Module d'habitation pliant (1) destiné à être monté sur le toit d'un véhicule (2) comportant un bac inférieur fixe (4) supportant un matelas et un bac supérieur (5) mobile articulé autour de charnières latérales (6) **caractérisé en ce que** dans une première phase de déploiement le bac mobile (5) s'entrouvre automatiquement au moyen d'un ressort (12) jusqu'à un angle supérieur à 20 degrés et que dans une deuxième phase il s'ouvre manuellement jusqu'à un angle supérieur à 200 degrés.

2. Module d'habitation pliant suivant la revendication 1 **caractérisé** à ce que les dits angles sont respectivement de 40 degrés et de 220 degrés.

3. Module d'habitation pliant suivant la revendication 1 et 2 **caractérisé en ce qu'**une des extrémités (14) du ressort (12) est articulée sur le bac mobile (5) et que l'autre extrémité (15) est articulée sur un bras de réaction (16) articulé près de l'axe des charnières latérales (6).

4. Module d'habitation pliant suivant la revendication 3 **caractérisé en ce que**, lors de la première phase d'ouverture, le bras de réaction (16) reste en appui sur le bac fixe (4).

5. Module d'habitation pliant suivant les revendications 3 et 4 **caractérisé en ce que**, lors de la deuxième phase d'ouverture, le bras de réaction (16) quitte son appui et pivote avec le bac mobile (5).

6. Module d'habitation pliant suivant l'une des revendications 3,4 et 5 **caractérisé en ce que** le bras de réaction (16) est constitué par un plateau articulé faisant office de table.

7. Module d'habitation pliant suivant la revendication 1 **caractérisé en ce que** la deuxième phase de déploiement est effectuée manuellement en prenant l'extrémité réglable (13) d'un marchepied (9) articulé sur le bac mobile (5).

8. Module d'habitation pliant suivant la revendication 7 **caractérisé en ce que** le marchepied (9) est articulé sur un angle de 180 degrés entre la position repliée et la position déployée.

9. Module d'habitation pliant suivant l'une des revendications 1, 7 et 8 **caractérisé en ce que** le bac mobile (5) repose sur le marchepied (9) lorsqu'il est déployé.

10. Module d'habitation pliant suivant l'une des revendications 1 et 2 **caractérisé en ce qu'**une sangle (23) est fixée sur le bac mobile (5) côté opposé aux charnières latérales (6) afin de le refermer.

11. Module d'habitation pliant suivant l'une des revendications 1 et 2 **caractérisé en ce que** l'axe des charnières (6) est surbaissé par rapport au plan de joint des deux bacs.
